# EUROPEAN PATENT APPLICATION

(11) **EP 1 830 542 A2**
(43) Date of publication of application: **05.09.2007**
(21) Application number: 07101042.5
(22) Date of filing: 23.01.2007
(51) Int. Cl.: H04M 1/02

(54) **Spring loaded sliding mechanism for a portable electronic device**

(30) Priority: 01.03.2006 US 366353
(71) Applicant: Nokia Corporation, 02150 Espoo (FI)
(72) Inventor: Scherling, Herman, 2980, Kokkedal (DK); Jorgensen, Claus H, 2300, Kobenhavn S (DK)
(74) Representative: Grey, Ian Michael

(57) **Abstract**

A portable electronic device including a housing comprising two sections slidable relative to each other. A slide control mechanism is provided between the two sections and comprises a cam member having a cam surface and, a cam follower including a biasing member to bias the cam follower against the cam surface. The cam surface has a profile which is configured such that the biasing force provided by the biasing member causes the cam follower to travel along the cam surface to bias one section relative to the other section and into a stable position. The biasing member comprises at least one spring element, the or each spring element configured to exert a force substantially perpendicular to the direction of movement of the two sections relative to each other.

## Description

The present invention relates to a portable electronic device, including a mobile telecommunications device such as a mobile phone or PDA, including a housing comprising two sections which are slidable relative to one another.

Portable electronic devices such as mobile phones are currently available in a variety of shapes and configurations. For example, some have all operating keys and a screen on their outside surfaces, where as other devices, such as 'flip' phones, comprise two sections hinged together at one end and may have the operating keys and/or screen provided on adjacent faces of the or each section such that when the sections are pivoted to lie against one another in a closed position, the screen and/or operating keys are hidden from view. This has the aesthetic advantage of giving the device a sleek, uncluttered look, but also has the practical advantage that these delicate components are protected when the device is not in use, for example, when being carried in a user's pocket or handbag. It also prevents the operating keys from being activated inadvertently, and the device may also be configured to switch off in the closed position, and switch on in the open position.

Another configuration of device that has the above aesthetic and functional advantages is of the sliding-type, which has two sections slidably connected together so that one section can slide relative to the other section between an operative (open) position and a storage (closed) position. In such a device, the screen and/or operating keys may be provided on one or both adjacent faces of the or each section so that they are exposed when the sections are slid apart in the operative position, and are concealed and protected when the sections are slid together in the storage position.

Such known sliding devices can suffer a number of drawbacks with regard to the mechanisms which control the sliding movement of the two sections. Firstly, conventional sliding mechanisms take up a lot of space within the device, meaning that the device must be a certain minimum size resulting in the device looking bulky. In addition, known sliding mechanisms that bias sections into either an open or closed position incorporate a torsion spring which requires free space within the device to accommodate the spring and allow for its range of movement in the sliding direction. This further adds to the size and bulk of the device.

A second problem associated with sliding mechanisms is that it can be difficult to eliminate slack between the two sliding sections when in the storage and operative positions. In other words, once the two sections have been slid into the storage or operative positions, they are not held firmly but can wobble and are loose. This is detrimental as it causes wear of the sliding mechanism and also gives the impression that the device lacks quality of manufacture. However, it is difficult to eliminate this slack because, with the increasing miniaturisation of technology, the space available within the device to accommodate a spring is small and so devices can only include correspondingly small springs. Such small springs are usually made of a thin material and are weak, so the retaining force produced is also very weak.

Furthermore, conventional sliding mechanisms do not have the advantage that the force with which the device slides open and closed can be easily selected at manufacture by a simple alteration of the properties of the mechanism components. Known mechanisms are configured to work in a single manner and cannot be designed to have different opening and closing characteristics.

A further problem in prior art sliding devices is that the sliding motion always has defined stop points at extremes of the range of sliding motion at which the two sections are held and prevented from sliding, but such stop points are not able to be designed to occur intermediate the extremes of the sliding range.

It is therefore an object of the present invention to provide a portable device that substantially alleviates or overcomes the problems mentioned above.

Accordingly, the present invention is characterised by a slide control mechanism between the two sections comprising a cam member having a cam surface and a cam follower including a biasing member to bias the cam follower against the cam surface, the cam surface having a profile which is configured such that the biasing force provided by the biasing member causes the cam follower to travel along the cam surface to bias one section relative to the other section into a stable position, the biasing member comprising at least one spring element, the or each spring element configured to exert a force substantially perpendicular to the direction of movement of the two sections relative to each other

The or each spring element may be a coil spring having a longitudinal axis, and the or each coil spring may be compressible in an axial direction to generate a biasing force to bias the cam follower against the cam surface. Two coil springs may be provided having their longitudinal axes parallel to each other, and the axial direction may be substantially perpendicular to the direction of movement of the two sections relative to each other. The force exerted by the or each spring may be exerted in a linear direction.

The profiled cam surface may include a first part angled such that the first section is biased relative to the other section into a first stable position and, a second part angled such that the first section is biased relative to the other section into a second stable position, the first section moving in opposite directions into said first and second stable positions, respectively. The first and second parts may be linear.

The profiled cam surface may be configured such that the first section can be positioned relative to the other section in a third stable position intermediate the first and second stable positions, and the profiled cam surface may include a third and a fourth part intermediate the first and second parts, angled such that the first section is biased relative to the other section into the third stable position, the first section moving in an opposite direction relative to the other section into said third stable position from the third and fourth parts, respectively. The third and fourth parts may also be linear.

The first and second stable positions may be defined by a stop formed at each end of the profiled cam surface to prevent movement of the sections relative to each other beyond the stop, and the profile of the cam surface may include a notch which is engaged by the cam follower when it reaches the stop.

The cam surface may include a notch at the first, second and third stable positions which is engaged by the cam follower when it reaches the first, second and third stable positions.

The cam follower may comprise at least one wheel rotatably mounted on a carrier, and the carrier may be slidably held in a mounting and moveable in a linear direction substantially perpendicular to the direction of movement of the two sections relative to each other.

At least one support wheel may be provided on the opposite side of the cam member from the cam follower, which contacts the cam member to prevent lateral movement of the first section relative to the other section and, the at least one support wheel may comprise a bearing mounted on a lug protruding from one of the sections. Two or more support wheels may be provided.

The cam member may be attached to one section, or the cam member may be formed integrally with one section.

The cam follower may include a pivotal member secured proximate one end to one section, and with the opposite end in contact with the cam surface.

The cam member may be a cam rail.

The portable electronic device may comprise a mobile telecommunications device.

Exemplary embodiments of the invention will now be described with reference to Figures 3 - 7 of the accompanying drawings, in which:
Figure 1 shows a typical sliding portable electronic device in a closed position;
Figure 2 shows a typical sliding portable electronic device in an open position;
Figure 3 shows a portable electronic device according to a first exemplary embodiment of this invention;
Figure 4 shows the sliding mechanism of the portable electronic device of Figure 3 in a first position;
Figure 5 shows the sliding mechanism of the portable electronic device of Figure 3 in a second position;
Figure 6 shows the sliding mechanism of the portable electronic device of Figure 3 in a third position;
Figure 7 shows the sliding mechanism of the portable electronic device of Figure 3 in a fourth position;
Figure 8 shows a sliding mechanism of a portable electronic device according to second exemplary embodiment of the invention, in a first position; and
Figure 9 shows a sliding mechanism of the portable electronic device of Figure 8 in a second position.

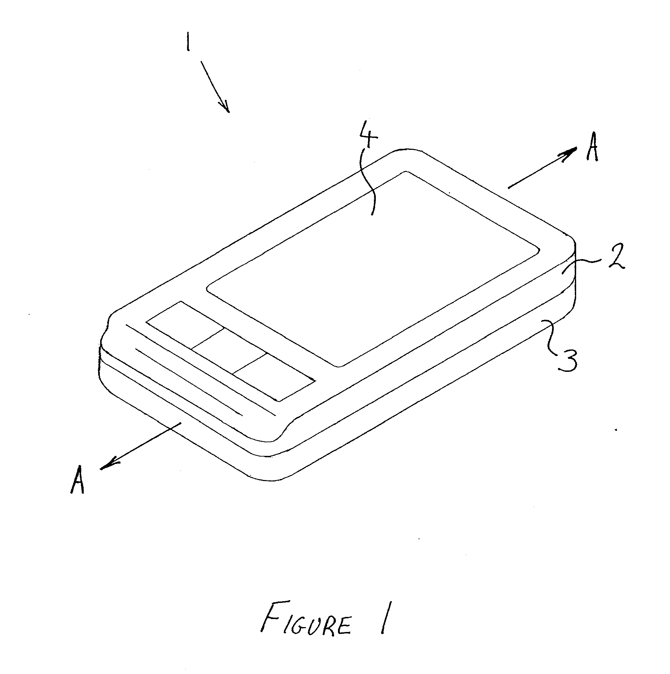

Figures 1 and 2 shows a typical sliding-type portable electronic device 1 having a top section 2 and a bottom section 3. The two sections are connected together by a sliding mechanism (not shown in Figures 1 and 2) so that they are able to move relative to each other by sliding in the direction shown by arrows 'A' from a closed, storage position (shown in Figure 1) to an open, operative position (shown in Figure 2). The typical portable device includes a screen 4 on an outside face of the first section 2, and a plurality of operating keys 5 on an inside face of the second section 3. Therefore, when the device 1 is in the storage position, the keys are hidden and thereby protected from being damaged or activated.

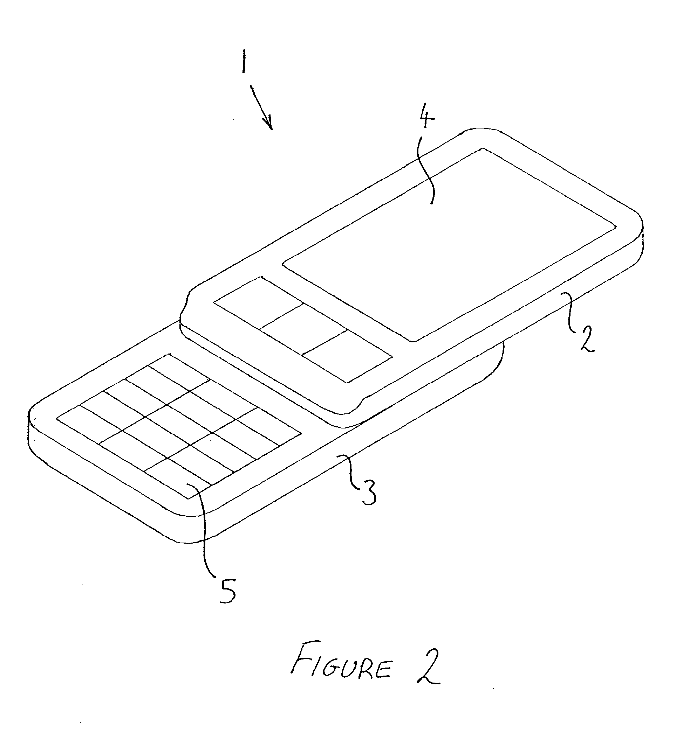

In order to alleviate the problems discussed above with current sliding-type portable electronic devices, an exemplary embodiment 10 of the invention is shown in Figure 3 and includes a casing 12 having a first, upper section 14, and a second, lower section 16. The upper and lower sections 14,16 are slidably connected together so that they are able to slide relative to one another in the direction shown by arrows 'B'. Figure 3 shows the device in a cut-away view to illustrate a control mechanism 20 housed within the casing 12, which acts to control the relative sliding movement of the upper and lower sections 14,16. The control mechanism 20 biases the upper and lower sections 14, 16 either away from each other to an operative position, or towards each other to a storage position, and is shown in isolation in Figures 4 - 7.

Referring to Figure 4, the control mechanism 20 comprising a cam member 21 mounted on the second section 16 and having a profiled cam surface 22, and a cam follower 30 attached to the first section 14. The cam member 21 is a rail or bar having one straight side and one profiled side, the profiled side being the cam surface 22. The cam follower 30 includes a sliding carrier 32 having a guide rod 34 extending therefrom into a corresponding aperture in a mounting 36. The carrier 32 is moveable in a direction shown by arrow 'C' substantially perpendicular to the direction of relative sliding movement of the two sections 14, 16, and the guide rod 34 guides the sliding motion of the carrier 32 by sliding into and out of the mounting 36. A wheel 38 is rotatably mounted to the carrier 32. The cam follower 30 includes two compression coil springs 40 provided between the mounting 36 and the carrier 32 which bias the carrier 32 away from the mounting 36 and so urge the wheel 38 against the profiled cam surface 22 of the cam member 21. Although the exemplary embodiment shown and described includes a wheel 38, another suitable element may be used in place of the wheel 38 to contact the cam surface 22, within the scope of the invention. For example, a short rail member or a sliding foot may extend from the carrier 32 to contact the cam surface 22. Furthermore, although compression coil eprings are shown and described in the exemplary embodiment of the invention, other alternative spring member(s) may be used within the scope of the invention, such as a rubber spring member, or a leaf spring, etc.

The cam surface 22 is configured with two oppositely sloping faces 23, 24 which meet at an apex 21a of the cam member 21 intermediate the distal ends of the cam member 21, and slope away from each other from that point. The cam surface 21 also includes stop portions 25, 26 at the remote ends of each sloping face 23, 24 respectively. A recess or rounded notch 27, 28 is formed at each stop 25, 26 at the remote end of each sloping face 23, 24 of the cam surface 22.

The upper section 14 includes two guide wheels 50 located on the opposite side of the cam member 21 to the cam surface 22. The side of the cam member 21 adjacent the guide wheels 50 is straight and aligned in the direction of relative sliding movement of the upper and lower sections 14, 16. The guide wheels 50 are low friction micro bearings mounted on lugs 52 protruding from the inner surface of the upper section 14, and are positioned such that they contact the straight side of the cam member 21. The guide wheels 50 are freely rotatable but are unable to move laterally relative to the cam member 21.

The operation of the first exemplary embodiment of the portable electronic device of the invention will now be described.

When the portable electronic device 10 is in the closed, storage position, the cam follower 30 is positioned adjacent one end of the cam surface 22 such that the wheel 38 is located in the notch 27 at that end (see Figure 4). The springs 40 bias the wheel 38 into the notch 27 in a first stable position and so, if a user wishes to slide the upper and lower sections 14, 16 relative to each other towards the open position, they must exert an initial force sufficient to move the wheel 38 out of the notch 27 against the biasing force of the springs 40. Therefore, the portable electronic device 10 is held in the first stable, storage position by the wheel 38 locating in the notch 27 until a user exerts such a sufficient force on the upper and lower sections 14, 16.

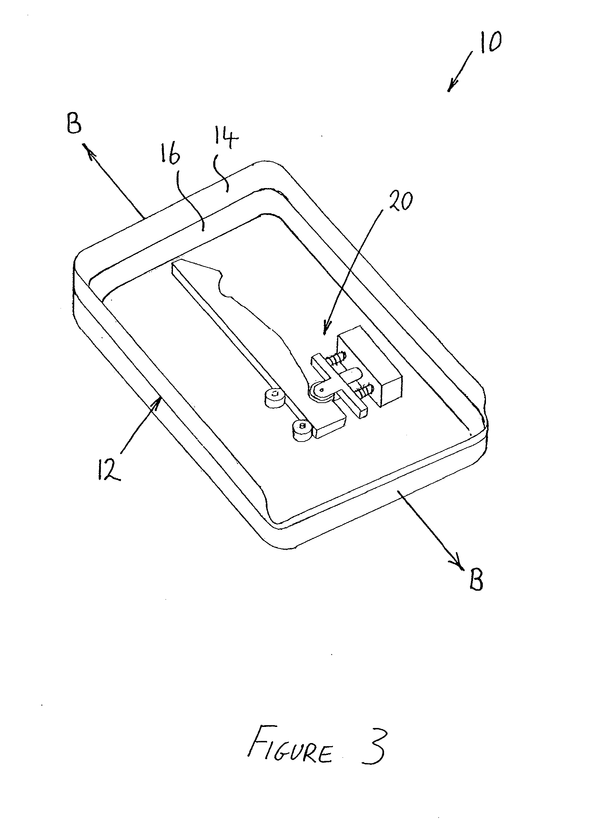

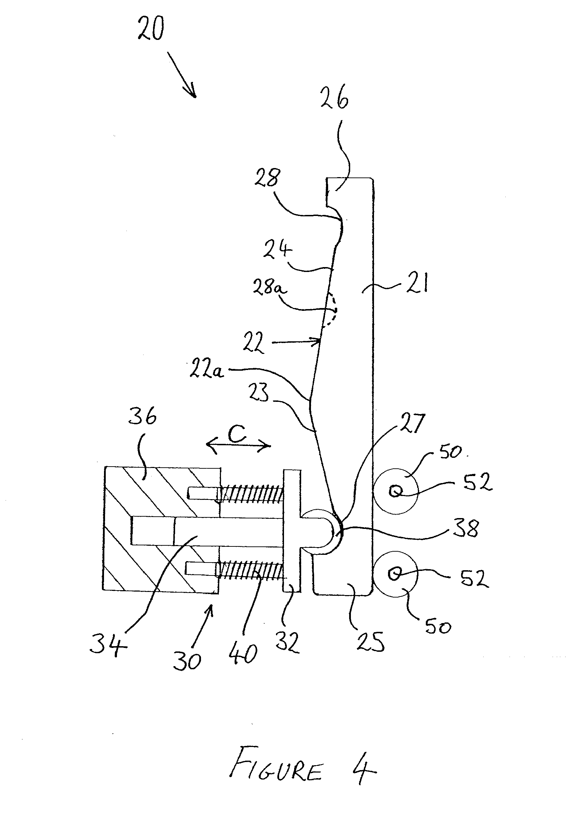

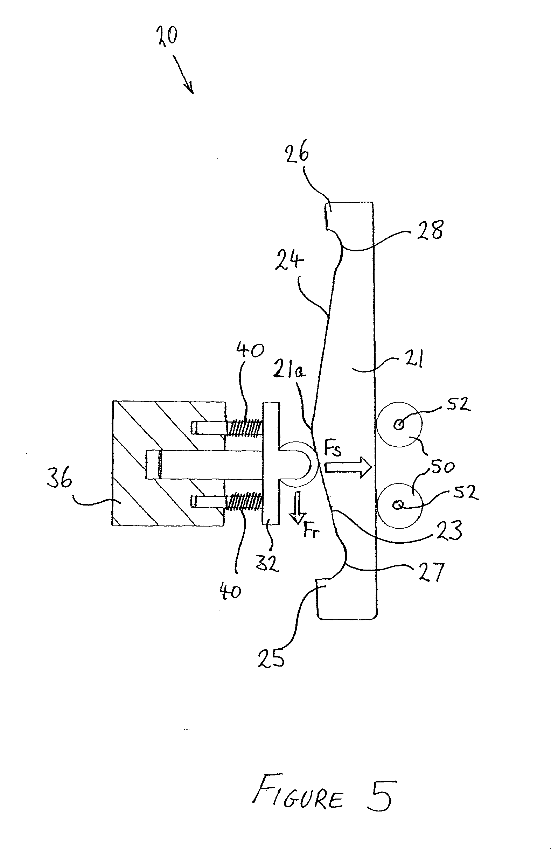

Once the user has slid the upper and lower sections 14, 16 apart from the storage position towards the operative position, the wheel 38 is positioned on the adjacent sloping face 23 of the cam surface 22 (see Figure 5) to the notch 27. In this position, the springs 40 act as described above to bias the wheel 40 against the cam surface 22, and the laterally immovable guide wheels 50 exert an opposite restraining force on the straight side of the cam member 21 to prevent the force of the springs 40 pushing the upper section 14 from moving it laterally relative to the lower section 16. Since the sloping face 23 is not perpendicular to the sliding direction of the cam follower 30, the force exerted by the springs 40 in the sliding direction of the cam follower 30, shown by arrow Fs urges the wheel 38 to roll down the sloping face 23 toward the notch 27 at the end of the cam surface 22, causing a resultant force vector Fr acting in the sliding direction of the two sections relative to each other. Therefore, if the user does not continue exerting a force pushing the upper and lower sections 14, 16 apart towards the operative position, the action of the cam follower 30 biased against the cam surface 22 will automatically bias the upper and lower sections 14, 16 to return to the storage position.

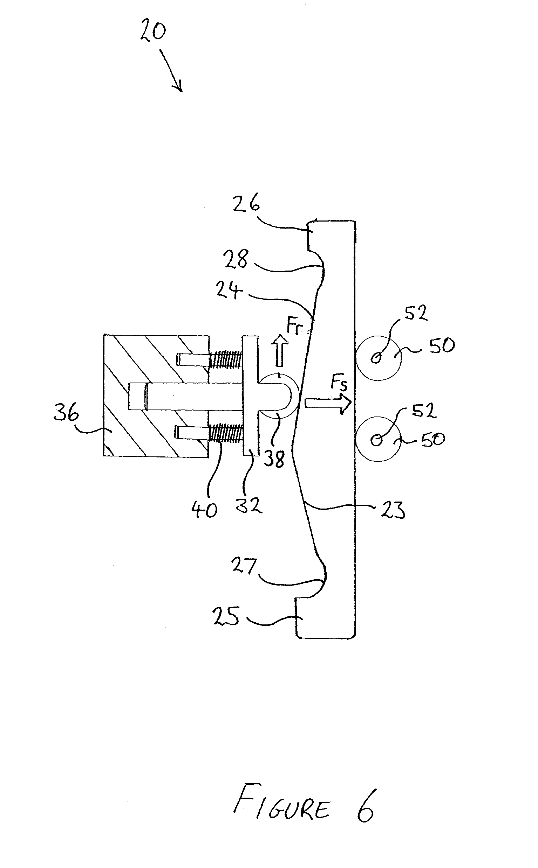

As the user continues to push the upper and lower sections 14, 16 towards the operative position, they must push against the force of the cam follower 30 acting against the sloping surface 23 of the cam surface 22, which results in the wheel 38 on the carrier 32 rolling up the sloping surface 23, thereby further compressing the coil springs 40, until the wheel 38 reaches the apex 21a of the cam member 21 where the two sloping faces 23, 24 meet. Beyond this point, the wheel 38 of the cam follower 30 is positioned on the other sloping face 24 of the cam surface 22 (see Figure 6) and so, similarly to as described above with reference to the first sloping part 23 of the cam surface 22, the force exerted by the springs 40 in the sliding direction of the cam follower 30, shown by arrow Fs urges the wheel 38 to roll down the second sloping face 24 toward the other notch 28 adjacent the other stop 26 at the other distal end of the cam surface 22 causing a resultant force vector Fr acting in the sliding direction of the two sections relative to each other. Therefore, the user does not need to continue to push the upper and lower sections 14, 16 apart towards the operative position, once the wheel 38 has passed beyond the apex 21a of the cam member 21, since the action of the cam follower 30 biased against the cam surface 22 will automatically bias the upper and lower sections 14, 16 to slide into the operative position.

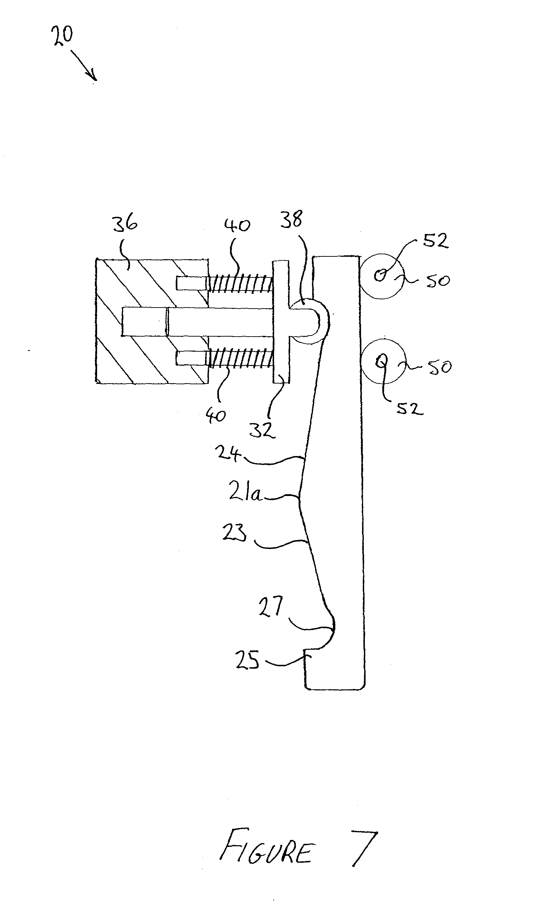

In the operative position, the wheel 38 locates in the other notch 28 (see Figure 7) and is held in that position until a user exerts a sufficient relative sliding force on the upper and lower sections 14, 16 towards the storage position to move the wheel 38 out of the notch 28 against the biasing force of the springs 40. Therefore, the operative position is a second stable position of the slide control mechanism 20.

It will be appreciated from the above description that the slide control mechanism 20 of the exemplary embodiment of the invention is relatively small compared to the size of the portable electronic device 10 and so it does not take up much space inside the device. Furthermore, the notches 27, 28 trap the wheel 38 to prevent mechanical play in the mechanism in the sliding direction when in the operative and storage positions and, the guide wheels 50 acting on the cam member 21 on the opposite side thereof to the cam follower 30 prevent mechanical play in the lateral direction throughout the range of sliding movement of the device. The notches 27, 28 also cause the wheel 38 to 'click' into the first or second stables positions when the device is in the storage or operative position, which gives a tactile indication to the user that the device has reached and is engaged in each position.

In addition to the above, the construction of the cam follower 30 with the coil compression springs 40 and sliding carrier 32 allows the relatively small mechanism 20 to exert a much stronger biasing force on the upper and lower sections 14, 16 than can be achieved with previously known mechanisms.

A further feature of the slide control mechanism 20 is that the force with which the upper and lower sections 14, 16 are biased to the storage/operative position can be selected according to the design of the cam surface 22. For example, if the mechanism 20 is designed to have steeper sloping faces 23, 24, then the force vector acting on the wheel 38 in the sliding direction of the two sections 14,1 6 relative to each other will be greater, and so the upper and lower sections 14, 16 will be biased to the storage/operative position with a greater force. Conversely, if the mechanism 20 is designed to have shallower sloping faces 23, 24, then the force vector acting on the wheel 38 in the sliding direction of the two sections relative to each other will be less, and so the upper and lower sections 14, 16 will be biased to the storage/operative position with a weaker force.

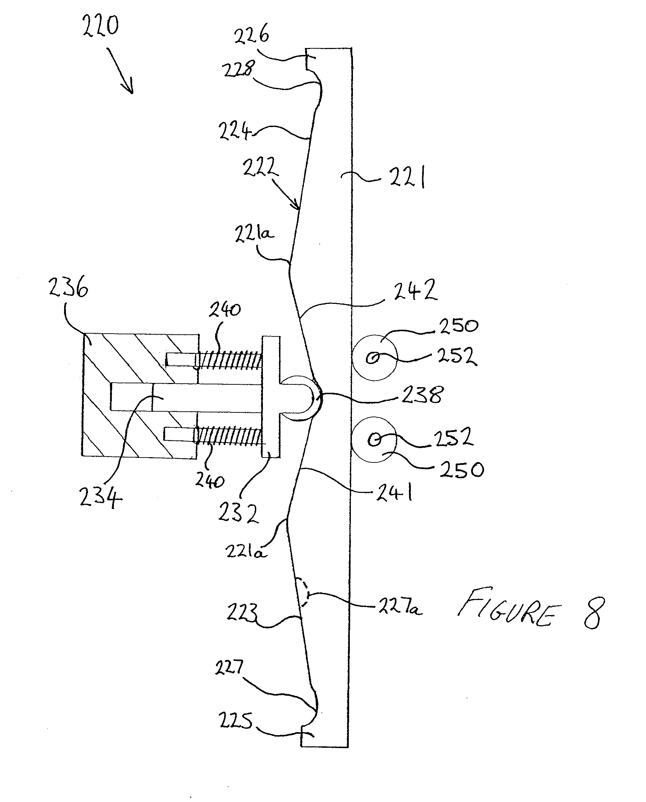

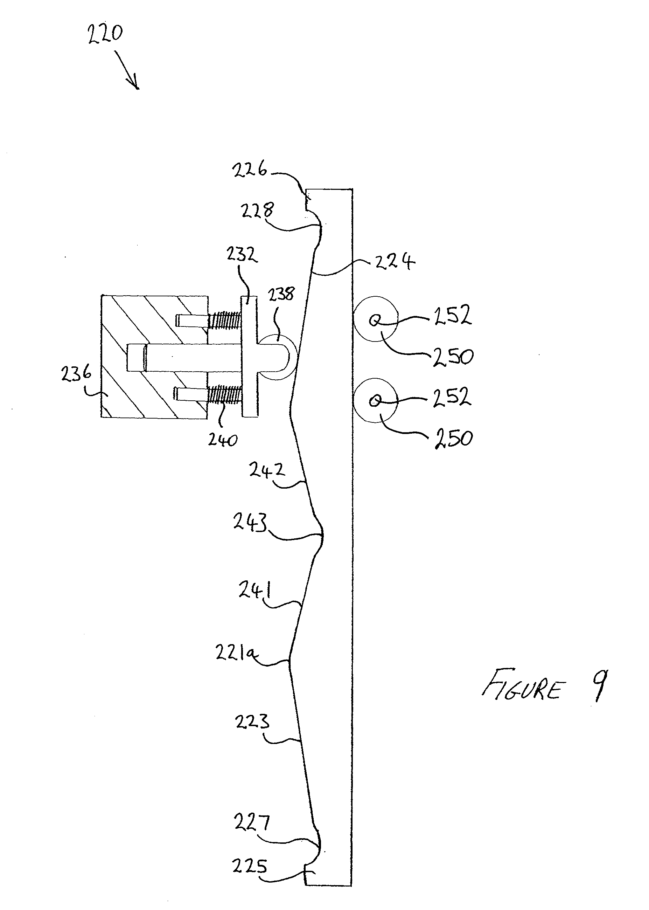

A slide control mechanism 220 of a second exemplary embodiment of the present invention is shown schematically in Figures 8 and 9, and includes a cam follower 230 having a carrier 232, a guide rod 234 received in a mounting 236, and springs 240 biasing a wheel 238 into contact with a cam surface 222 of a cam member 221 as described above in the first exemplary embodiment of the invention.

The upper section 14 includes two guide wheels 250 located on the opposite side of the cam member 221 to the cam surface 222. The side of the cam member 221 adjacent the guide wheels 250 is straight and aligned in the direction of relative sliding movement of the upper and lower sections 14, 16. The guide wheels 250 are low friction micro bearings mounted on lugs 252 protruding from the inner surface of the upper section 14, and are positioned such that they contact the straight side of the cam member 221. The guide wheels 250 are freely rotatable but are unable to move laterally relative to the cam member 221

However, the mechanism 220 of the second exemplary embodiment differs in the shape of the profiled cam surface 222. As can be seen in Figures 8 and 9, as with the first exemplary embodiment, the cam surface 222 is configured with two oppositely sloping faces 223, 224 which slope away from each other towards stop portions 225, 226 at the remote ends of each sloping face 223, 224 respectively.

A recess or rounded notch 227, 228 is formed at each stop 225, 226 at the remote end of each sloping face 223, 224 of the cam surface 222. However, the two sloping faces 223, 224 do not meet at a single apex of the cam member 221. Instead, the ends of each sloping face 223, 224 remote from the distal ends of the cam member 221 reach separate apexes 221a of the cam member 221, and meet an end of two further sloping faces 241, 242 intermediate the two apexes 221a of the cam member 221, respectively. The further sloping faces 241, 242 slope away from the first and second faces 223, 224 respectively, towards an intermediate, third stable position. The third stable position is defined by a third notch 243.

The second exemplary embodiment of the portable electronic device of the invention comprises upper and lower sections as with the first exemplary embodiment described above. It will be appreciated that, in use, if the cam follower 230 is positioned on the first sloping face 223, the upper and lower sections will be biased relative to each other into the first stable position such that the cam wheel 238 moves towards and locates in the first notch 227. Similarly, if the cam follower 230 is positioned on the second sloping face 224, the upper and lower sections will be biased relative to each other into the second stable position such that the cam wheel 238 moves towards and locates in the second notch 228. However, if the cam follower 230 is positioned between the two apexes 221a of the cam member 21 on either of the further sloping faces 241, 242, the upper and lower sections will be biased relative to each other into the third stable position such that the cam wheel 238 moves towards and locates in the third notch (see Figure 8).

The above-described second slide control mechanism 220 allows the portable electronic device of a second exemplary embodiment of the invention to slide from a storage position, to two different and opposite operative positions. In this embodiment, the device is in the storage position in the third stable position, intermediate the first and second stable positions. From there, a user can slide the upper and lower sections relative to each other in a first direction until the cam wheel 238 locates in the first notch 237 in the first stable position. This corresponds to a first operative position. Alternatively, a user may slide the upper and lower sections relative to each other in the opposite direction (see Figure 9) until the cam wheel 238 locates in the second notch 238 in the second stable position. This corresponds to the second operative position. This unique capability of allowing the upper and lower sections of the portable electronic device to slide in two opposite directions from the storage position, is provided by the cam surface profile being configured with three separate stable positions as shown and described, and allows a wider range of device control designs to be implemented. In addition, the mechanism 220 still has the operational advantages of compact size and strong biasing force, eliminated mechanical play in the stable positions, and easy design modification to alter the biasing force by altering the sloping face angles, as described above with reference to the first exemplary embodiment of the invention.

The slides of either of the two embodiments described above may be adapted to incorporate one or more additional intermediate stable positions, by formation of further notches along one or more of the sloped faces of the cam surface. In such case, these would provide additional stable positions in which the upper and lower sections would not move relative to one another. These are shown, by way of example, as a notch 28a in dashed lines in Figure 4, and a notch 227a in dashed lines in Figure 8.

A further alternative embodiment of the invention intended to fall within the scope of the claims could comprise a curved device in which one section was configured to slide relative to the other section along a curved path rather than a straight path as with the devices described previously. In such a curved slide device, the cam member would be required to be curved to follow the shape of one of the sliding sections, and the cam follower would be mounted on the other section in contact with the cam member as with the previous embodiments described above. The sliding control mechanism of the device would work as described previously, with the cam member having sloping parts to bias one section relative to the other section into one or more stable positions, with the option of the cam member surface incorporating additional intermediate stable positions, and/or being configured to allow one section to slide in its curved path from a storage position to an operative positions in one directions, or slide in its curved path from a storage position one of two operative positions in two opposite directions.

It will be appreciated that the above-described embodiments are exemplary only and further modifications may be made within the scope of the invention, as defined in the claims hereafter.

## Claims

1. A portable electronic device (10) including a housing (12) comprising two sections (14,16) slidable relative to each other **characterised by** a slide control mechanism (20,220) between the two sections (14,16) comprising a cam member (21,221) having a cam surface (22,222) and a cam follower (30,230) including a biasing member to bias the cam follower (30,230) against the cam surface (22,222), the cam surface (22,222) having a profile which is configured such that the biasing force provided by the biasing member causes the cam follower (30,230) to travel along the cam surface (22,222) to bias one section (14) relative to the other section (16) into a stable position, the biasing member comprising at least one spring element (40,240), the or each spring element (40,240) configured to exert a force substantially perpendicular to the direction of movement of the two sections (14,16) relative to each other.

2. A portable electronic device (10) according to claim 1 in which the or each spring element (40,240) is a coil spring having a longitudinal axis, the or each coil spring being compressible in an axial direction to generate a biasing force to bias the cam follower (30,230) against the cam surface (22,222).

3. A portable electronic device (10) according to claim 2 comprising two coil springs (40,240) having their longitudinal axes parallel to each other.

4. A portable electronic device (10) according to claim 3 in which the axial direction is substantially perpendicular to the direction of movement of the two sections (14,16) relative to each other.

5. A portable electronic device (10) according to any preceding claim in which the force exerted by the or each spring (40,240) is exerted in a linear direction.

6. A portable electronic device (10) according to any preceding claim in which the profiled cam surface (22,222) includes a first part (23,223) angled such that the first section (14) is biased relative to the other section (16) into a first stable position and, a second part (24,224) angled such that the first section (14) is biased relative to the other section (16) into a second stable position, the first section (14) moving in opposite directions into said first and second stable positions, respectively.

7. A portable electronic device (10) according to claim 6 in which the first and second parts (23,223,24,224) are linear.

8. A portable electronic device (10) according to claim 6 or claim 7 in which the profiled cam surface (22,222) is configured such that the first section (14) can be positioned relative to the other section (16) in a third stable position intermediate the first and second stable positions.

9. A portable electronic device (10) according to any of claims 6 to 8 in which the profiled cam surface (222) includes a third and fourth part (241,242) intermediate the first and second parts (223,224), angled such that the first section (14) is biased relative to the other section (16) into the third stable position, the first section (14) moving in an opposite direction relative to the other section (16) into said third stable position from the third and fourth parts (241,242) respectively.

10. A portable electronic device (10) according to claim 9 in which the third and fourth parts (241,242) are linear.

11. A portable electronic device (10) according to any of claims 6 to 10 in which the first and second stable positions are defined by a stop (25,225,26,226) formed at each end of the profiled cam surface (22,222) to prevent movement of the sections (14,16) relative to each other beyond the stop (25,225,26,226).

12. A portable electronic device (10) according to claim 11 in which the profile of the cam surface (22,222) includes a notch (27,227,28,228) which is engaged by the cam follower (30,230) when it reaches the stop (25,225,26,226).

13. A portable electronic device (10) according to any of claims 8 to 12, when dependent on claim 8, in which the cam surface includes a notch (27,227,28,228,28a,227a) at the first, second and third stable positions which is engaged by the cam follower (30,230) when it reaches the first, second and third stable positions.

14. A portable electronic device (10) according to any preceding claim in which the cam follower (30,230) comprises at least one wheel (38,238) rotatably mounted on a carrier (32,232).

15. A portable electronic device (10) according to claim 14 in which the carrier (32,232) is slidably held in a mounting (36,236) and is moveable in a linear direction substantially perpendicular to the direction of movement of the two sections (14,16) relative to each other.

16. A portable electronic device (10) according to any preceding claim in which at least one support wheel (50,250) is provided on the opposite side of the cam member (21,221) from the cam follower (30,230), which contacts the cam member (21,221) to prevent lateral movement of the first section (14) relative to the other section (16).

17. A portable electronic device (10) according to claim 16 in which the at least one support wheel (50,250) comprises a bearing mounted on a lug (52,252) protruding from one of the sections (14,16).

18. A portable electronic device (10) according to claim 16 or claim 17 in which two support wheels (50,250) are provided.

19. A portable electronic device (10) according to any preceding claim in which the cam member (21,221) is attached to one section (14,16).

20. A portable electronic device (10) according to any preceding claim in which the cam member (21,221) is formed integrally with one section (14,16).

21. A portable electronic device (10) according to claim 1 in which the cam follower includes a pivotal member secured proximate one end to one section (14,16) and with the opposite end in contact with the cam surface.

22. A portable electronic device (10) according to any preceding claim wherein the cam member (21,221) is a cam rail.

23. A portable electronic device (10) according to any preceding claim wherein the device is a mobile telecommunications device.
